# EUROPEAN PATENT SPECIFICATION

(11) **EP 4 078 117 B1**
(45) Date of publication and mention of the grant of the patent: **06.08.2025**
(21) Application number: 19956440.2
(22) Date of filing: 19.12.2019
(51) Int. Cl.: G01K 1/02, G08C 17/02, G08C 19/00

(54) **APPARATUS FOR MEASURING TEMPERATURE OF SWITCHGEAR, ASSEMBLING METHOD THEREOF AND SWITCHGEAR**
VORRICHTUNG ZUR MESSUNG DER TEMPERATUR EINER SCHALTANLAGE, MONTAGEVERFAHREN DAFÜR UND SCHALTANLAGE
APPAREIL PERMETTANT DE MESURER LA TEMPÉRATURE D'UN APPAREILLAGE DE COMMUTATION, SON PROCÉDÉ D'ASSEMBLAGE ET APPAREILLAGE DE COMMUTATION

(43) Date of publication of application: 26.10.2022
(73) Proprietor: ABB SCHWEIZ AG, 5400 Baden (CH)
(72) Inventor: LIN, Jiling, Xiamen, Fujian 361101 (CN); ZHUANG, Genhuang, Xiamen, Fujian 361001 (CN); HUANG, Ming, Xiamen, Fujian 361006 (CN); HUANG, Liqun, Xiamen, Fujian 361006 (CN)
(74) Representative: Zimmermann & Partner Patentanwälte mbB
(86) International application number: PCT/CN2019/126691
(87) International publication number: WO 2021/120118

(56) References cited:
- CN-A- 106 441 618
- CN-A- 106 441 618
- CN-A- 106 610 319
- CN-B- 106 441 618
- CN-U- 205 373 907
- CN-U- 206 695 920
- CN-U- 209 027 693
- JP-A- 2008 159 038
- KR-A- 20160 120 921
- KR-B1- 101 582 828

## Description

### FIELD

Embodiments of the present disclosure generally relate to a switchgear, and more specifically, to an apparatus for measuring temperature of a switchgear and assembling method thereof.

### BACKGROUND

In electrical components such as a switchgear, heat is usually generated at the locations where components such as busbars, cables, and the contact unit are connected, causing local high temperatures at those locations, namely, hotspots. Monitoring the temperatures of these locations is an important factor in ensuring the safety of electrical components.

Monitoring temperatures of the hotspots typically involves installations of relating apparatus such as sensors, which are vulnerable to possible poor assembly and long overdue operations. Furthermore, as the demand for smart control or monitoring of the electrical components continues to increase, sensors with wireless modules are widely used in the switchgear, especially in the medium voltage switchgear. The wireless module, which is typically integrated with the sensor, can wirelessly transmit data representing the temperature for health condition monitoring.

With the development of technology, the demand for miniaturization of the switchgear is also increasing, which makes it difficult for sensors with integrated wireless modules to be installed at or near hotspots. Even if the sensors with integrated wireless modules can be mounted in a compact space, the high temperature often damages the wireless module due to its proximity to the hotspots.

Document CN 106 441 618 B describes a passive monitoring device with a temperature sensor and a wireless communication module. When used in the field, a stainless steel cable is used to directly fix the temperature sensor on an isolating switch conductive arm. The stainless steel cable is tightened to ensure that the temperature sensor is in close contact with the isolating switch contact junction.

### SUMMARY

The invention is set out in the appended set of claims.

Embodiments of the present disclosure provide an apparatus for measuring temperature of a switchgear.

In a first aspect, an apparatus for measuring a temperature of a switchgear is provided. The apparatus comprises at least one sensor arranged at or adjacent to a predetermined portion of the switchgear and configured to sense a temperature of the predetermined portion; a transmission module coupled to the at least one sensor via a cable and configured to wirelessly transmit data representing the temperature; and a power module coupled to a busbar of the switchgear and configured to draw power from the busbar by induction and to supply the power to the transmission module and the at least one sensor.

By coupling the sensors to the transmission module via cables, the transmission module can be arranged at more suitable positions away from predetermined positions where high temperature usually occurs. In this way, the layout in switchgear tends to be more reasonable, improving the safety and maintenance efficiency. Furthermore, one transmission module can be coupled to one or more sensors, resulting in low cost and a higher installation efficiency.

In some embodiments, the apparatus further comprises a tube made of copper and serving as at least a part of the busbar, the tube adapted to receive at least a part of the cable and the at least one sensor. With this arrangement, the sensor is able to sense a more accurate temperature due to being closer to the hotspot. In addition, a reduction of external components can effectively reduce the possibility of sharp corner potentials, thereby further improving the safety of the switchgear.

In some embodiments, the apparatus further comprises a housing provided adjacent to the busbar and adapted to receive the transmission module and the power module. This arrangement further facilitates an installation of the transmission module and the power module.

In some embodiments, the power module comprises an induction unit provided around the busbar and configured to draw power from the busbar through the induction; and a voltage regulation unit coupled to the induction unit and configured to regulate voltages to match requirements of the at least one sensor and the transmission module. In this way, the power module can draw power directly from the busbar, eliminating the need for additional batteries or cables and facilitating miniaturization of the apparatus.

In some embodiments, the voltage regulation unit and the transmission module are provided on a printed circuit board. This arrangement increases integration of the apparatus.

In some embodiments, the printed circuit board comprises a through-hole for the busbar to pass through. As a result, the apparatus can be easily mounted to a suitable position on the busbar, further facilitating the installation of the induction unit around the busbar.

In some embodiments, at least one of the housing or the printed circuit board is of a ring shape or a half-ring shape adapted to be detachably arranged around the busbar. In this way, the apparatus can be easily mounted to a suitable position on the busbar while reducing the possibility of concentration of charges at sharp corners.

In some embodiments, each of the at least one sensor comprises a mounting portion adapted to mount the respective sensor in the tube by a fastener; and a sensing circuit enclosed by a thermal glue and adapted to sense the temperature. In this way, the sensor can easily be mounted in the tube, increasing the installation efficiency.

In some embodiments, the apparatus further comprises a mounting module coupled to the tube and configured to facilitate an installation of the tube to the switchgear. This arrangement can improve the stability of the apparatus.

In a second aspect, a method of assembling an apparatus for measuring a temperature of a switchgear is provided. The method comprises arranging at least one sensor at or adjacent to a predetermined portion of the switchgear to sense a temperature of the predetermined portion; coupling a transmission module to the at least one sensor via a cable, and the transmission module adapted to wirelessly transmit data representing the temperature; and coupling a power module to a busbar of the switchgear, and the power module configured to draw power from the busbar by induction and to supply the power to the transmission module and the at least one sensor.

In a third aspect, a switchgear is provided. The switchgear comprising an apparatus as mentioned in the above first aspect.

It is to be understood that the Summary is not intended to identify key or essential features of embodiments of the present disclosure, nor is it intended to be used to limit the scope of the present disclosure. Other features of the present disclosure will become easily comprehensible through the description below.

### BRIEF DESCRIPTION OF THE DRAWINGS

The above and other objectives, features and advantages of the present disclosure will become more apparent through more detailed depiction of example embodiments of the present disclosure in conjunction with the accompanying drawings, wherein in the example embodiments of the present disclosure, same reference numerals usually represent same components.
FIG. 1 shows a side view of an apparatus for measuring temperature of a switchgear according to embodiments of the present disclosure;
FIG. 2 shows a perspective view of an apparatus for measuring temperature of a switchgear according to embodiments of the present disclosure;
FIG. 3 shows a side view of an apparatus for measuring temperature of a switchgear according to further embodiments of the present disclosure;

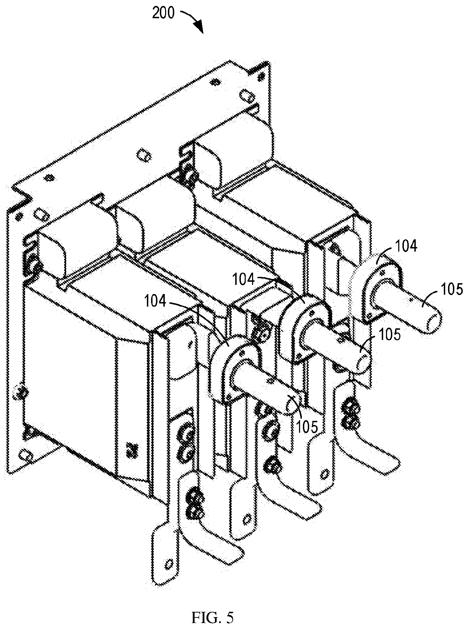

FIGS. 4 and 5 show schematic diagrams of an installation of an apparatus for measuring temperature of a switchgear according to embodiments of the present disclosure;
FIG. 6 shows a side view of a switchgear according to embodiments of the present disclosure;
FIG. 7 shows an exploded view of a housing of an apparatus for measuring temperature of a switchgear according to embodiments of the present disclosure;
FIG. 8 shows a perspective view of a sensor of an apparatus for measuring temperature of a switchgear according to embodiments of the present disclosure;
FIG. 9 shows an exploded view of an apparatus for measuring temperature of a switchgear according to embodiments of the present disclosure; and
FIG. 10 shows a flowchart illustrating a method for assembling an apparatus for measuring temperature of a switchgear according to embodiments of the present disclosure.

Throughout the drawings, the same or similar reference symbols are used to indicate the same or similar elements.

### DETAILED DESCRIPTION

The present disclosure will now be discussed with reference to several example embodiments. It is to be understood these embodiments are discussed only for the purpose of enabling those skilled persons in the art to better understand and thus implement the present disclosure, rather than suggesting any limitations on the scope of the subject matter.

As used herein, the term "comprises" and its variants are to be read as open terms that mean "comprises, but is not limited to." The term "based on" is to be read as "based at least in part on." The term "one embodiment" and "an embodiment" are to be read as "at least one embodiment." The term "another embodiment" is to be read as "at least one other embodiment." The terms "first," "second," and the like may refer to different or same objects. Other definitions, explicit and implicit, may be comprised below. A definition of a term is consistent throughout the description unless the context clearly indicates otherwise.

Health status of electrical apparatuses such as switchgears is one of the most important issues that users are concerned about. Monitoring temperatures of a switchgear as basic data of health status is indispensable in electrical products. Moreover, the demand for temperature monitoring in power distribution switchgear, especially the hotspot of a busbar joint, cable joint, and circuit breaker (CB) arm joint, needs installations of relating components such as sensors, which are vulnerable to the possible poor assembly and long overdue operation.

Furthermore, with the development of technology, sensors with wireless modules are widely used in the switchgear, especially in the medium voltage switchgear. The wireless module, which is typically integrated with the sensor, can wirelessly transmit data representing the temperature for health condition monitoring.

However, for some newly designed switchgear with much more compact space in each compartment, it's difficult to find a clear space for each hotspot to install the sensor integrated with a wireless module, which would also experience high risk in dielectric tests. Even if the sensors with integrated wireless modules could be mounted in a compact space, the high temperature often damages the wireless module due to its proximity to hot spots.

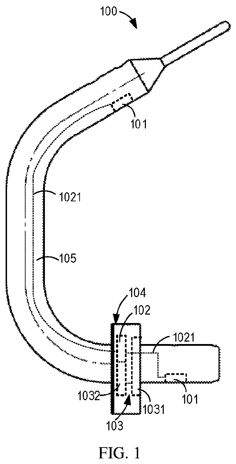

In order to address or at least partially address the above and other potential problems, embodiments of the present disclosure provide an apparatus 100 for measuring a temperature of a switchgear 200. FIG. 1 shows a side view of an apparatus for measuring a temperature of a switchgear according to embodiments of the present disclosure.

As shown, the apparatus 100 for measuring a temperature of the switchgear 200 according to embodiments of the present disclosure generally comprises at least one sensor 101, a transmission module 102 and a power module 103 to supply power to the transmission module 102 and the at least one sensor 101.

To facilitate monitoring of the temperature of some predetermined portion of the switchgear 200 where high temperature typically occurs, at least one sensor 101 is arranged at or adjacent to the predetermined portion to sense the temperature thereof.

In contrast to conventional solutions, the sensor 101 is separated from the transmission module 102. According to embodiments of the present disclosure, one transmission module 102 can be coupled to one or more than one sensor 101. Specifically, the transmission module 102 is coupled to at least one sensor 101 via a cable 1021. In this way, the transmission module 102 can obtain data from the at least one sensor 101 and wirelessly transmit the data representing the temperature to, for example, a control unit of the switchgear or an external device such as a computer or even a mobile phone.

In this way, the transmission module can be arranged at more suitable positions away from the predetermined positions where the high temperature usually occurs. In this way, the layout in switchgear 200 tends to be more reasonable, improving safety and maintenance efficiency. Furthermore, one transmission module can be coupled to one or more sensors, resulting in low cost and higher installation efficiency.

In some embodiments, the data representing the temperature from the sensors may be transmitted in the form of digital pulse signals. For example, in some embodiments, the transmission module or a counting unit thereof can obtain the data representing the temperature by counting the number of pulses over a predetermined time slot. In this way, the data can be transmitted to the transmission module more efficiently and without interference.

It is to be understood that the above embodiments where the data may be transmitted in the form of digital pulse signals are merely illustrative, without suggesting any limitation as to the scope of the present disclosure. Any other suitable means or forms are possible as well. For example, in some alternative embodiments, the data representing the temperature from the sensors may be transmitted in the form of analog signals. In those embodiments, a D/A unit may be provided in the transmission module 102 or between the transmission module 102 and the sensors 101.

In some embodiments, the transmission module may transmit the data via any appropriate wireless transmission method, comprising but not limited to at least one of Wi-Fi, Bluetooth, Zigbee, Z-wave, Bluetooth Low Energy (BLE), 6LoWPAN, Near Field Communication (NFC), Wi-Fi Direct, Global System for Mobile Communications (GSM), LTE, a NarrowBand Internet of Things (NB-IoT), or LTE-M.

Furthermore, the power module 103 can be coupled to the busbar of the switchgear 200 to draw power from the busbar by induction. As mentioned above, the power drawn from the busbar can be supplied to transmission module 102 and the at least one sensor 101 through cables. In this way, no extra power pack, such as a battery is needed, which facilitates the miniaturization of the apparatus 100.

In some embodiments, the power module 103 may comprise an induction unit 1031. The induction unit 1031 may be an iron core with coils provided around the busbar. In this way, the induction unit 1031 can draw power by induction. The induction unit 1031 may further comprise a voltage regulation unit 1032 coupled to the induction unit 1031 to regulate voltages to meet the requirements of the at least one sensor 101 and the transmission module 102. For example, the voltage regulation unit 1032 can convert the magnitude of voltage to 3.3V for use by sensors 101 and transmission modules 102.

The predetermined portions of the switchgear 200 as mentioned above may be hotspots of the switchgear 200, which are usually located at busbar joints, cable joints and circuit breaker (CB) arm joints. In some alternative embodiments, alternatively or additionally, the predetermined portions may also be any other suitable locations where the temperature needs to be monitored. Hereinafter, the present disclosure will be described with the sensor being arranged at hotspots as an example, and it is to be understood that it is also possible that the sensor is arranged at other suitable positions.

In some embodiments, the apparatus 100 can be used in the existing switchgear with plate-shaped busbars. For example, in each phase of the upper or lower branch, multiple sensors 101 may be arranged at or adjacent to the hotspots at busbar joint, cable joint, or CB arm joint. In the meantime, one transmission module 102 coupled to the multiple sensors 101 via the cable 1021 may be arranged at a suitable position away from the hotspots. The cable 1021 and/or the multiple sensors 101 may be arranged in additional tubes or sleeves extending along the busbars. This arrangement is more conducive to the modification of existing switchgears to obtain a more accurate temperature measuring.

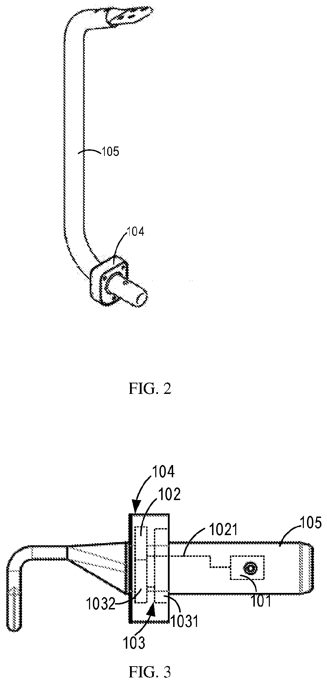

In embodiments, as shown in FIGS. 1 and 2, the apparatus comprises a tube, optionally made of copper, which can serve as at least a part of the busbar. At least a part of the cables 1021 and the at least one sensor 101 can be arranged in the tube 105, as shown in FIGS. 1 and 3. In this way, the sensor 101 can be arranged closer to the hotspots to obtain a more accurate value of the temperature. In some embodiments, all of the cables 1021 and the at least one sensor 101 are arranged in the tube to avoid concentration of charges at sharp corners, improving the stability of the apparatus.

Furthermore, the arrangement of a part of cables 1021 and sensors 101 in the tube reduces the number or sizes of exposed external components. Herein, external components mean that the components are arranged outside the busbars. In order to avoid concentration of charges at sharp corners, in addition to the necessary components, the fewer external components, the better.

According to embodiments of the present disclosure, the reduction of external components can effectively reduce the possibility of concentration of charges at sharp corners, thereby further improving the safety of the switchgear. Furthermore, for the portions of cables or sensors that cannot be hidden in the tube, additional tubes made of other suitable materials may be provided to sleeve the portions of the cables or sensors to avoid concentration of charges at sharp corners.

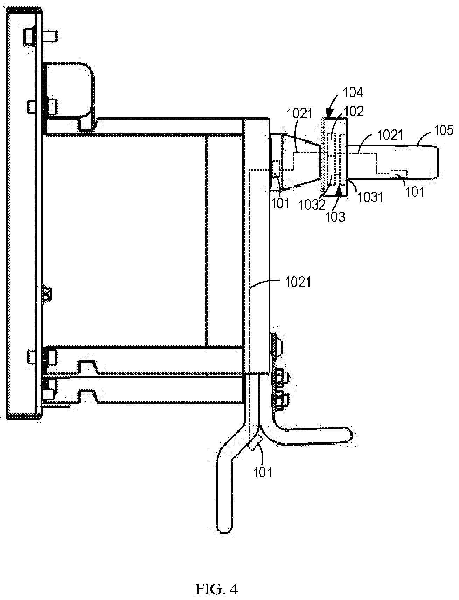

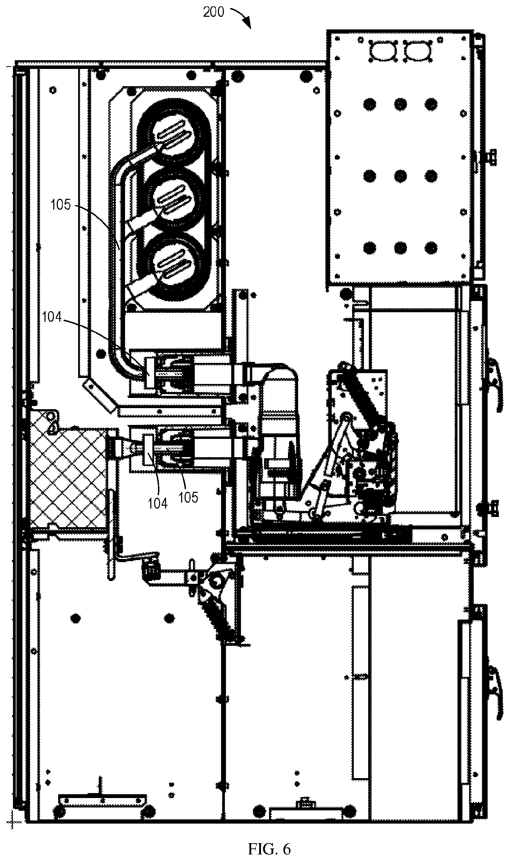

In order to achieve the above arrangements, for the existing switchgear, the busbar of either upper branch or lower branch may be replaced with the tube made of copper. For example, the apparatus 100 as shown in FIGS. 1 and 2 may be used to replace the existing plate-shaped busbars of the upper branch. The apparatus 100 as shown in FIG. 3 may be used to replace the busbars of the lower branch, as shown in FIGS. 4 and 6. For the newly developed switchgears, the busbars of either the upper branch or lower branch may directly employ the tube 105 made of copper. In this way, the layout in switchgear tends to be more reasonable, improving safety and maintenance efficiency.

In some embodiments, to facilitate installation of the transmission module 102 and the power module 103, a housing 104 as shown in FIGS. 1-3 may be provided adjacent to the busbar. The transmission module 102 and the power module 103 may be arranged in the housing 104 to improve integration of the apparatus 100. Furthermore, the housing 104 may have rounded chamfers to avoid concentration of charges at sharp corners.

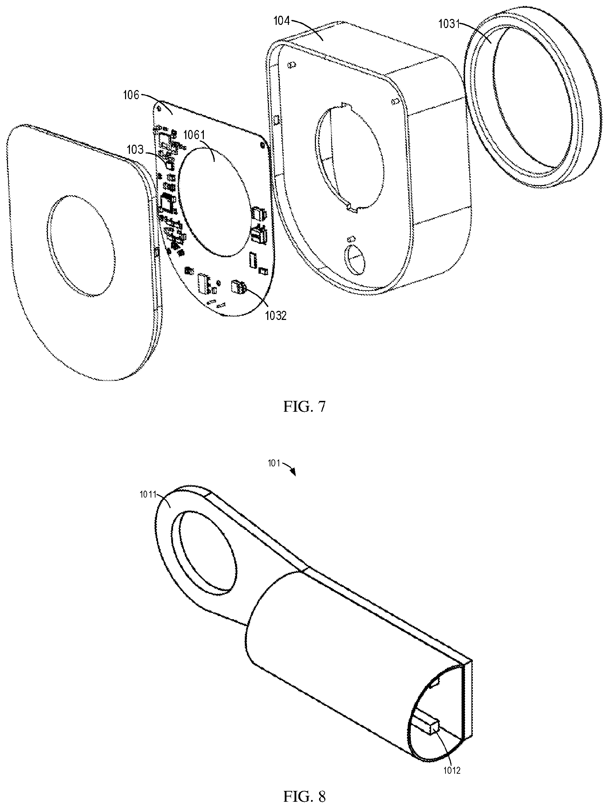

In some embodiments, the voltage regulation unit 1032 and the transmission module 103 may be provided on a printed circuit board 106, as shown in FIG. 7. It is to be understood that the positions of the transmission module 103 and the voltage regulation unit 1032 in FIG. 7 are only schematic. This arrangement can further increase integration of the apparatus 100. In some embodiments, a through-hole 1061 may be provided on the printed circuit board 106 for the busbar to pass through.

As shown in FIG. 7, besides the printed circuit board 106, the housing 104 also has a through-hole for the busbar to pass through. For example, in some embodiments, at least one of the housing 104 or the printed circuit board 106 is of a ring shape or a half-ring shape adapted to be detachably arranged around the busbar. As a result, the apparatus 100 can be easily mounted to a suitable position on the busbar, further facilitating the installation of the induction unit around the busbar.

To facilitate mounting of the sensor 101 in the tube, as shown in FIG. 8, in some embodiments, the sensor 101 may be substantially plate-shaped with a mounting portion 1011 at one end and a sensing circuit 1012 at another end. The mounting portion 1011 may have a through-hole for a fastener to pass through so that the sensor 101 can be mounted in the tube 105.

In some embodiments, the fastener may be, for example, a screw. To facilitate operation of the screw, a through-hole may be provided on a side of the tube 105 which is radially opposite to the side where the sensor 101 needs to be mounted. In this way, a tool may pass through the through-hole to operate the screw. The sensing circuit 1012 may be enclosed by a thermal glue to protect the sensing circuit 1012 while facilitating heat transfer for a more accurate temperature sensing.

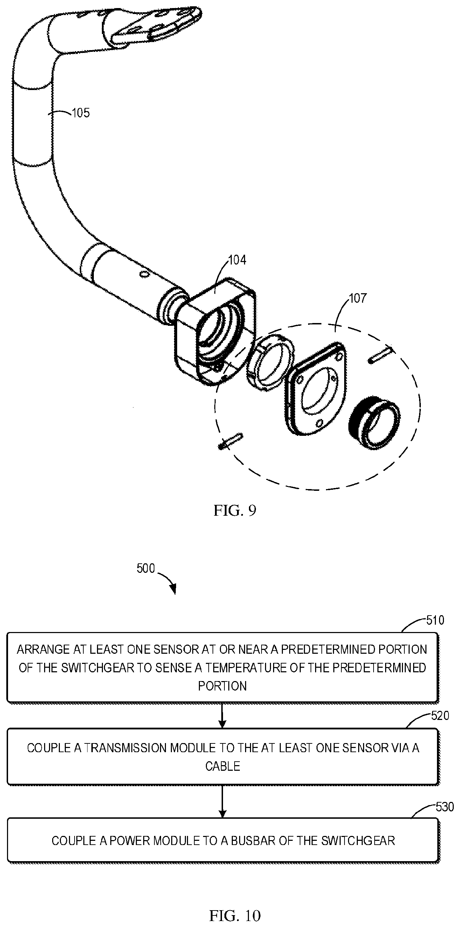

To facilitate installation of the tube 105 to the switchgear 200, in some embodiments, a mounting module 107 may be coupled to the tube 105. As shown in FIG. 9, in some embodiments, the mounting module 107 may be arranged in the housing 104. The mounting module 107 may comprise elements that can be coupled to the corresponding elements arranged in the switchgear 200 to mount the tube 105 to the switchgear 200.

It can be seen from the above that with the apparatus 100 according to embodiments of the present disclosure, one transmission module 102 can be coupled to one or more sensors. On the one hand, the number of the transmission module 102 is half or less than conventional solutions, reducing costs of the apparatus. On the other hand, the sensor 100 without the transmission module has a tiny volume, which is more convenient to be installed in an appropriate location, such as in the tube 105, to obtain more accurate temperature data. Furthermore, the reduction in the number of parts such as transmission module 102 also facilitates the installation of the apparatus 100 in the switchgear 200.

Embodiments of the present disclosure further provide a method of assembling an apparatus for measuring a temperature of a switchgear. FIG. 10 shows a flowchart 500 illustrating the method. As shown, in block 510, at least one sensor 101 is arranged at or adjacent to a predetermined portion of the switchgear to sense a temperature of the predetermined portion.

In block 520, a transmission module 102 is coupled to the at least one sensor 101 via a cable 1021. The transmission module 102 can wirelessly transmit data representing the temperature to the modules, such as a control unit at the low voltage side. In block 530, a power module 103 is coupled to a busbar of the switchgear 200. The power module 103 can draw power from the busbar by induction and supply the power to the transmission module 102 and the at least one sensor 101.

It is to be understood that the order of the above steps does not mean that the method must be performed in that order, and the order in which these steps are performed can be adjusted or performed simultaneously.

## Claims

1. An apparatus for measuring temperature of a switchgear, comprising:
at least one sensor (101) configured to be arranged at or adjacent to a predetermined portion of the switchgear (200) and configured to sense a temperature of the predetermined portion;
a transmission module (102) coupled to the at least one sensor (101) via a cable (1021) and configured to wirelessly transmit data representing the temperature; and
a power module (103) configured to be coupled to a busbar of the switchgear (200) and configured to draw power from the busbar by induction and to supply the power to the transmission module (102) and the at least one sensor (101), and
a tube (105) configured for serving as at least a part of the busbar, the tube (105) adapted to receive at least a part of the cable (1021) and the at least one sensor (101).

2. The apparatus of claim 1, the tube (105) being made of copper.

3. The apparatus of claim 1, further comprising:
a housing (104) configured to be provided adjacent to the busbar and adapted to receive the transmission module (102) and the power module (103).

4. The apparatus of claim 1, wherein the power module (103) comprises:
an induction unit (1031) configured to be provided around the busbar and configured to draw power from the busbar through the induction; and
a voltage regulation unit (1032) coupled to the induction unit (1031) and configured to regulate voltages to match requirements of the at least one sensor (101) and the transmission module (102).

5. The apparatus of claim 4, wherein the voltage regulation unit (1032) and the transmission module (103) are provided on a printed circuit board (106).

6. The apparatus of claim 5, wherein the printed circuit board (106) comprises a through-hole (1061) for the busbar to pass through.

7. The apparatus of claim 3 or 6, wherein at least one of the housing (104) or the printed circuit board (106) is of a ring shape or a half-ring shape adapted to be detachably arranged around the busbar.

8. The apparatus of claim 1 or 2, wherein each of the at least one sensor (101) comprises:
a mounting portion (1011) adapted to mount the at least one sensor (101) in the tube (105) by a fastener; and
a sensing circuit (1012) enclosed by a thermal glue and adapted to sense the temperature.

9. The apparatus of claim 1 or 2, further comprising a mounting module (107) coupled to the tube (105) and configured to facilitate an installation of the tube (105) to the switchgear (200).

10. The apparatus of claim 1, wherein the predetermined portion comprises at least a location of one hotspot of the switchgear.

11. A method for assembling an apparatus for measuring a temperature of a switchgear, comprising:
arranging at least one sensor (101) at or adjacent to a predetermined portion of the switchgear(200) to sense a temperature of the predetermined portion;
coupling a transmission module (102) to the at least one sensor (101) via a cable (1021), and the transmission module (102) adapted to wirelessly transmit data representing the temperature;
coupling a power module (103) to a busbar of the switchgear (200), and the power module (103) configured to draw power from the busbar by induction and to supply the power to the transmission module (102) and the at least one sensor (101);
using a tube (105) as at least a part of the busbar; and
arranging at least a part of the cable (1021) and the at least one sensor (101) in the tube.

12. A switchgear comprising an apparatus of any of claims 1-10.

## Patentansprüche

1. Vorrichtung zur Messung der Temperatur einer Schaltanlage, umfassend:
mindestens einen Sensor (101), der dazu ausgelegt ist, an einem festgelegten Abschnitt der Schaltanlage (200) oder daran angrenzend angeordnet zu sein, und dazu ausgelegt ist, eine Temperatur des festgelegten Abschnitts zu erfassen;
ein Übertragungsmodul (102), das über ein Kabel (1021) mit dem mindestens einen Sensor (101) gekoppelt und dazu ausgelegt ist, die Temperatur darstellende Daten drahtlos zu übertragen; und
ein Stromversorgungsmodul (103), das dazu ausgelegt ist, mit einer Sammelschiene der Schaltanlage (200) gekoppelt zu sein, und dazu ausgelegt ist, durch Induktion Strom von der Sammelschiene zu entnehmen und den Strom dem Übertragungsmodul (102) und dem mindestens einen Sensor (101) zuzuführen, und
ein Rohr (105), das dazu ausgelegt ist, als zumindest ein Teil der Sammelschiene zu dienen, wobei das Rohr (105) dazu eingerichtet ist, zumindest einen Teil des Kabels (1021) und des mindestens einen Sensors (101) aufzunehmen.

2. Vorrichtung nach Anspruch 1, wobei das Rohr (105) aus Kupfer gefertigt ist.

3. Vorrichtung nach Anspruch 1, ferner umfassend:
ein Gehäuse (104), das dazu ausgelegt ist, an die Sammelschiene angrenzend vorgesehen zu sein, und dazu eingerichtet ist, das Übertragungsmodul (102) und das Stromversorgungsmodul (103) aufzunehmen.

4. Vorrichtung nach Anspruch 1, wobei das Stromversorgungsmodul (103) Folgendes umfasst:
eine Induktionseinheit (1031), die dazu ausgelegt ist, um die Sammelschiene herum vorgesehen zu sein, und dazu ausgelegt ist, durch die Induktion Strom von der Sammelschiene zu entnehmen; und
eine Spannungsregulierungseinheit (1032), die mit der Induktionseinheit (1031) gekoppelt und dazu ausgelegt ist, Spannungen zu regulieren, um den Anforderungen des mindestens einen Sensors (101) und des Übertragungsmoduls (102) zu entsprechen.

5. Vorrichtung nach Anspruch 4, wobei die Spannungsregulierungseinheit (1032) und das Übertragungsmodul (103) auf einer Leiterplatte (106) vorgesehen sind.

6. Vorrichtung nach Anspruch 5, wobei die Leiterplatte (106) eine Durchgangsbohrung (1061) zum Durchführen der Sammelschiene umfasst.

7. Vorrichtung nach Anspruch 3 oder 6, wobei das Gehäuse (104) und/oder die Leiterplatte (106) ringförmig oder halbringförmig und dazu eingerichtet ist, lösbar um die Sammelschiene herum angeordnet zu sein.

8. Vorrichtung nach Anspruch 1 oder 2, wobei jeder des mindestens einen Sensors (101) Folgendes umfasst:
einen Montageabschnitt (1011), der dazu eingerichtet ist, den mindestens einen Sensor (101) mit einem Befestigungselement im Rohr (105) zu montieren; und
eine Sensorschaltung (1012), die von Wärmeleitklebstoff umschlossen und dazu eingerichtet ist, die Temperatur zu erfassen.

9. Vorrichtung nach Anspruch 1 oder 2, ferner umfassend ein Montagemodul (107), das mit dem Rohr (105) gekoppelt und dazu ausgelegt ist, den Einbau des Rohrs (105) an der Schaltanlage (200) zu ermöglichen.

10. Vorrichtung nach Anspruch 1, wobei der festgelegte Abschnitt mindestens eine Position eines Hotspots der Schaltanlage umfasst.

11. Verfahren zur Montage einer Vorrichtung zur Messung der Temperatur einer Schaltanlage, umfassend:
Anordnen mindestens eines Sensors (101) an einem festgelegten Abschnitt der Schaltanlage (200) oder daran angrenzend, um eine Temperatur des festgelegten Abschnitts zu erfassen;
Koppeln eines Übertragungsmoduls (102) über ein Kabel (1021) mit dem mindestens einen Sensor (101) und wobei das Übertragungsmodul (102) dazu eingerichtet ist, die Temperatur darstellende Daten drahtlos zu übertragen;
Koppeln eines Stromversorgungsmoduls (103) mit einer Sammelschiene der Schaltanlage (200) und wobei das Stromversorgungsmodul (103) dazu ausgelegt ist, durch Induktion Strom von der Sammelschiene zu entnehmen und den Strom dem Übertragungsmodul (102) und dem mindestens einen Sensor (101) zuzuführen;
Verwenden eines Rohrs (105) als zumindest ein Teil der Sammelschiene und
Anordnen zumindest eines Teils des Kabels (1021) und des mindestens einen Sensors (101) in dem Rohr.

12. Schaltanlage, umfassend eine Vorrichtung nach einem der Ansprüche 1-10.

## Revendications

1. Appareil permettant de mesurer la température d'un appareillage de commutation, comprenant :
au moins un détecteur (101) configuré pour être agencé au niveau de, ou adjacent à, une portion prédéterminée de l'appareillage de commutation (200) et configuré pour détecter une température de la portion prédéterminée ;
un module de transmission (102) couplé à l'au moins un détecteur (101) par l'intermédiaire d'un câble (1021) et configuré pour transmettre sans fil des données représentant la température ; et
un module de puissance (103) configuré pour être couplé à une barre omnibus de l'appareillage de commutation (200) et configuré pour tirer de la puissance de la barre omnibus par induction et pour alimenter en puissance le module de transmission (102) et l'au moins un détecteur (101), et
un tube (105) configuré pour servir d'au moins une partie de la barre omnibus, le tube (105) étant conçu pour recevoir au moins une partie du câble (1021) et l'au moins un détecteur (101).

2. Appareil selon la revendication 1, le tube (105) étant en cuivre.

3. Appareil selon la revendication 1, comprenant en outre :
un logement (104) configuré pour être prévu adjacent à la barre omnibus et conçu pour recevoir le module de transmission (102) et le module de puissance (103).

4. Appareil selon la revendication 1, dans lequel le module de puissance (103) comprend :
une unité d'induction (1031) configurée pour être prévue autour de la barre omnibus et configurée pour tirer de la puissance de la barre omnibus par le biais de l'induction ; et
une unité de régulation de tension (1032) couplée à l'unité d'induction (1031) et configurée pour réguler des tensions pour faire correspondre des besoins de l'au moins un détecteur (101) et du module de transmission (102).

5. Appareil selon la revendication 4, dans lequel l'unité de régulation de tension (1032) et le module de transmission (103) sont prévus sur une carte de circuit imprimé (106).

6. Appareil selon la revendication 5, dans lequel la carte de circuit imprimé (106) comprend un trou traversant (1061) pour le passage de la barre omnibus.

7. Appareil selon la revendication 3 ou la revendication 6, dans lequel au moins un élément parmi le logement (104) ou la carte de circuit imprimé (106) est en forme de bague ou en forme de demi-bague conçue pour être agencée de manière détachable autour de la barre omnibus.

8. Appareil selon la revendication 1 ou la revendication 2, dans lequel chacun de l'au moins un détecteur (101) comprend :
une portion de montage (1011) conçue pour monter l'au moins un détecteur (101) dans le tube (105) par un élément de fixation ; et
un circuit de détection (1012) enfermé par une colle thermique et conçu pour détecter la température.

9. Appareil selon la revendication 1 ou la revendication 2, comprenant en outre un module de montage (107) couplé au tube (105) et configuré pour faciliter une installation du tube (105) sur l'appareillage de commutation (200).

10. Appareil selon la revendication 1, dans lequel la portion prédéterminée comprend au moins un emplacement d'un point d'accès sans fil de l'appareillage de commutation.

11. Procédé d'assemblage d'un appareil permettant de mesurer la température d'un appareillage de commutation, comprenant :
l'agencement d'au moins un détecteur (101) au niveau de, ou adjacent à, une portion prédéterminée de l'appareillage de commutation (200) pour détecter une température de la portion prédéterminée ;
le couplage d'un module de transmission (102) à l'au moins un détecteur (101) par l'intermédiaire d'un câble (1021), et le module de transmission (102) étant conçu pour transmettre sans fil des données représentant la température ;
le couplage d'un module de puissance (103) à une barre omnibus de l'appareillage de commutation (200), et le module de puissance (103) étant configuré pour tirer de la puissance de la barre omnibus par induction et pour alimenter en puissance le module de transmission (102) et l'au moins un détecteur (101) ;
l'utilisation d'un tube (105) en tant qu'au moins une partie de la barre omnibus ; et
l'agencement d'au moins une partie du câble (1021) et de l'au moins un détecteur (101) dans le tube.

12. Appareillage de commutation comprenant un appareil selon l'une quelconque des revendications 1 à 10.
